# EUROPÄISCHE PATENTANMELDUNG

(11) **EP 0 867 107 A1**
(43) Veröffentlichungstag der Anmeldung: **30.09.1998**
(21) Anmeldenummer: 97810187.1
(22) Anmeldetag: 27.03.1997
(51) Int. Cl.: A01D 33/02

(54) **Krautentfernungsvorrichtung an Kartoffelerntemaschine**

(71) Anmelder: SAMRO AG, CH-3400 Burgdorf (CH)
(72) Erfinder: Zwahlen, Hermann, 3266 Wiler (CH)
(74) Vertreter: AMMANN PATENTANWAELTE AG BERN

(57) **Zusammenfassung**

Die Krautentfernungsvorrichtung erfasst Kraut (4), das sich oben auf dem Gemenge aus Kartoffeln (3), Kraut (4) und meistens auch Steinen und Erde befindet, und fördert es nach oben vom Förderband (8) einer Kartoffelerntemaschine (18) weg. Vorteilhaft wird diese Krautentfernungsvorrichtung kurz hinter der Aufnahmevorrichtung (7) für kartoffelhaltiges, mit Kraut (4) bedecktem Erdreich (2) angeordnet, wo sich das Kraut noch oben auf dem geernteten Material befindet und damit sicher erfasst werden kann. Die Krautentfernungsvorrichtung besteht aus einer Anzahl parallel angeordneter Krautschwerter (10), auf denen borstenartige Greifmittel (12) umlaufen. Kartoffelkraut (4) wird von den Borsten (12) erfasst, während Kartoffeln (3) zwischen den Krautschwertern (10) hindurchtreten können. Bevorzugt werden noch, je nach Erntebedingungen, vor jedem Krautschwert ein Leitstab (20) angeordnet, der durch Aufbrechen der Erde Verstopfungen vermeidet, und/oder eine Andruckwalze (21) über den das Kraut wegziehenden Borsten (12) angeordnet, um das Kraut fester in die Borsten hineinzudrücken. Vorteilhaft sind auch Trenner (22), um die noch am Kraut (4) hängenden Kartoffeln (3) vom Kraut (4) abzureissen.

## Beschreibung

Die vorliegende Erfindung bezieht sich auf eine Krautentfernungsvorrichtung gemäss Oberbegriff des Anspruchs 1.

Kartoffelvollernter nehmen den Ackerboden, in dem sich die (reifen) Kartoffeln befinden, auf und entfernen danach soweit als möglich Erde, Kartoffelkraut, Steine und andere unerwünschte Beimengungen von den Kartoffeln. Eine wichtige Anforderung an diese Maschinen ist dabei eine möglichst schonende Behandlung der Kartoffeln, denen daher möglichst jede Richtungsänderung und Fallstrecken erspart werden sollte. Die hierbei auftretenden Schäden sind oft erst bei der Verwendung der Kartoffeln, d. h. im geschälten Zustand, in Form von Flecken etc. sichtbar.

Eine wichtige Funktionseinheit von Kartoffelvollerntern ist die Krautentfernungseinrichtung. Bei den bekannten Vollerntern werden Zupfwalzen oder äquivalente Einrichtungen angewendet. Bei diesen Zupfwalzen wird das Kraut zwischen zwei Walzen oder auch z. B. zwischen einer Umlenkrolle eines Förderbandes und einer Walze eingeklemmt und nach unten weggezogen. Für eine hinreichende Effektivität ist es dabei nötig, zusätzlich Finger vorzusehen. Die Finger sind in einem solchen Abstand voneinander angeordnet, dass die Kartoffeln zwischen den Fingern hindurchtreten können, aber Kraut von den Fingern erfasst und nach unten in den Einzugsbereich der Zupfrollen geführt wird. Unvermeidlich ist es dabei, dass Kartoffeln zunächst gegen die Finger, die relativ starr und hart sind, schlagen, sich unter Umständen drehen müssen und erst dann die Fingeranordnung passieren können. Dieses Anschlagen provoziert ebenfalls die oben genannten Ernteschäden.

Eine Aufgabe der vorliegenden Erfindung ist es, eine verbesserte Krautentfernungsvorrichtung an Kartoffelerntemaschinen anzugeben.

Eine derartige Krautentfernungsvorrichtung ist im Anspruch 1 angegeben. Die weiteren Ansprüche beziehen sich auf bevorzugte Ausführungsformen.

Üblicherweise nehmen Kartoffelernter das kartoffelhaltige Erdreich mittels Scharen auf. Das Erdreich gelangt dann auf ein Förderband, das in der Regel bereits als Sieb wirkt und durch das locker anhaftendes Erdreich bereits nach unten durch das Förderband hindurchfallen kann. Gemäss der Erfindung wird bevorzugt kurz nach Aufnahme des kartoffelhaltigen Erdreiches die Krautentfernungsvorrichtung angeordnet. In diesem Stadium des Erntevorganges ist die räumliche Anordnung des aufgenommenen Gutes noch nahezu wie auf dem Feld, insbesondere befindet sich das Kraut im wesentlichen oben auf dem Erdreich.

Entsprechend greift die Krautentfernungsvorrichtung auf der Oberseite des aufgenommenen Erdreiches an. Die an der Krautentfernungsvorrichtung angebrachten Greifmittel fahren also von oben mindestens bis zur Oberfläche an das aufgenommene Gut heran, bevorzugt jedoch auch in das Erdreich hinein. Die Greifmittel werden dann wieder vom Erdreich nach oben entfernt, wobei das Kartoffelkraut erfasst und mitgezogen wird. An geeigneter Stelle wird das Kraut von den Greifmitteln entfernt und wegbefördert. Bei dieser Arbeitsweise der Krautentfernungsvorrichtung werden oft auch relativ grossflächige, z. B. verkrautete, Erdklumpen miterfasst und mit dem Kraut abgeführt. Diese Klumpen, die durch das als Sieb wirkende Förderband nicht entfernt werden können, werden also vorteilhaft bereits sehr früh vom Gut abgetrennt.

Denkbar ist es aber auch, die Krautentfernungsvorrichtung an anderem Ort anzuordnen, wo z. B. das Erdreich schon weitgehend entfernt ist. Für eine optimale Wirksamkeit sollte aber das Kraut in der Regel oben auf den Kartoffeln liegen.

Die Erfindung wird weiter an einem Ausführungsbeispiel unter Bezugnahme auf Figuren erläutert.
- Figur 1: zeigt längsschnittartig die prinzipielle Anordnung der Funktionselemente im Eingangstrakt eines Kartoffelernters im Betrieb;
- Figur 2: zeigt eine Draufsicht auf den Eingangstrakt eines Kartoffelernters; und
- Figur 3: zeigt in einer Ansicht wie Figur 1 vorteilhafte Weiterbildungen der Krautentfernungsvorrichtung.

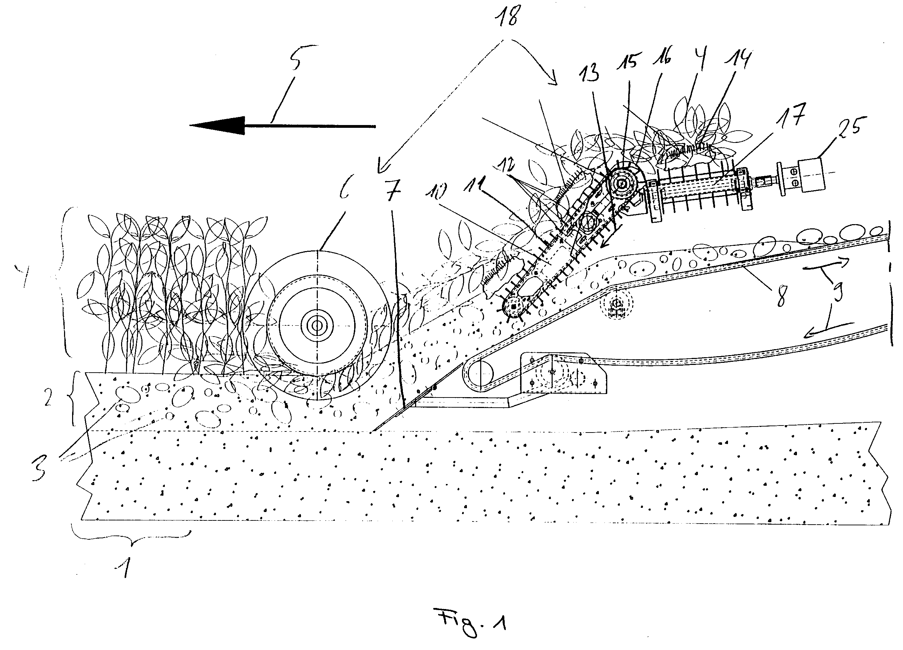

Figur 1 zeigt links den Zustand des Kartoffelackers 1 vor dem Ernter. In einer oberen Erdschicht 2, die meist für die Kartoffelernter 18 zu parallelen Dämmen mit in etwa V-förmigem Querschnitt geformt ist, befinden sich die Kartoffeln 3. Obenauf steht oder liegt das Kartoffelkraut 4.

Die sich gemäss Pfeil 5 fortbewegende Kartoffelerntemaschine 18 bewegt zunächst die vorlaufende Dammwalze 6 über das Erdreich 2, wobei das Kraut 4 umgelegt und an die Erdoberfläche angedrückt wird. Durch die der Dammwalze 6 folgende Schar 7 wird das kartoffelhaltige Erdreich 2 aufgenommen und durch die Vorwärtsbewegung der Erntemaschine der Siebkette 8 übergeben, die in der Art eines Förderbandes umläuft. Loses Erdreich und kleinere Erdklumpen können, wie oben erwähnt, bei der Vorwärtsbewegung in Richtung 9 auf der Siebkette 8 nach unten zum Boden zurückfallen.

Die erfindungsgemässe Krautentfernungsvorrichtung besteht nun aus einem oder mehreren Krautschwertern 10. Auf diesen Krautschwertern läuft ein Endlosband 11, z. B. ein Keilriemen, um, das mit Borstenbüscheln 12 besetzt ist. Das Band 11 läuft gemäss Pfeil 13 um.

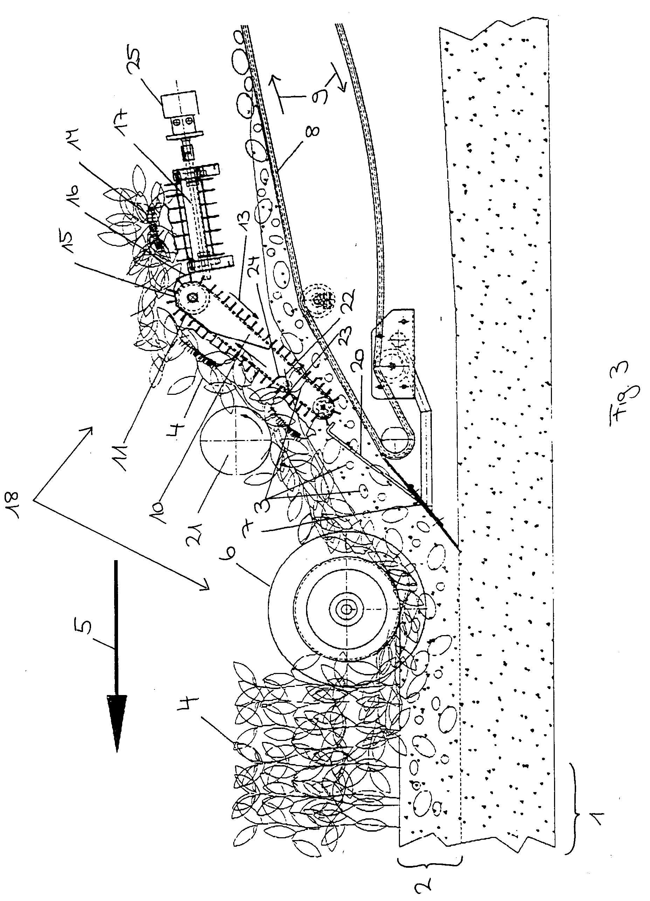

Die Borstenbüschel 12 fahren damit mit dem Untertrum des Bandes 11 in das Erdreich 2 auf der Siebkette 8 hinein und auf der Erdzufuhrseite gleichsinnig schräg zur Richtung 9 wieder aus dem Erdreich 2 heraus. Dabei ergreifen sie das auf dem Erdreich 2 liegende Kraut 4 und auch zusammenhängende Erdklumpen 14. Dabei mitangehobene Kartoffeln können mit einem Trenner 2 gefangen werden, wonach das Kraut 4 abgerissen wird und die Kartoffeln 3 zurückfallen (s. Fig. 3). Die Vorderkante 23 des Trenners 22 darf dabei nicht zu scharfkantig sein, um Verletzungen der Kartoffeln 3 zu vermeiden.

Offensichtlich bewirkt das noch in grosser Menge vorhandene Erdreich, dass das Kraut 4 sich in relativ grossem Abstand vom Siebband 8 befindet. Die umlaufenden Borsten können daher sicher unter die Krautschicht geführt werden, ohne dabei das Siebband 8 zu berühren, das sich gegensinnig zum Untertrum des Bandes 11 bewegt.

Die Länge und Steifigkeit der Borsten sowie die Dichte der Anordnung der Borsten wird empirisch für eine möglichst hohe Wirksamkeit bei geringer Verletzungsgefahr für die Kartoffeln gewählt.

Am entfernten Ende 15 des Krautschwerts 10 sind Abstreifer 16 angeordnet, die das Kraut 4 und die Erdklumpen von den Borstenbüscheln 12 abheben und auf ein Querförderband 16 ablegen, das die abgetrennten Teile seitlich aus dem Ernter 18 hinausbefördert.

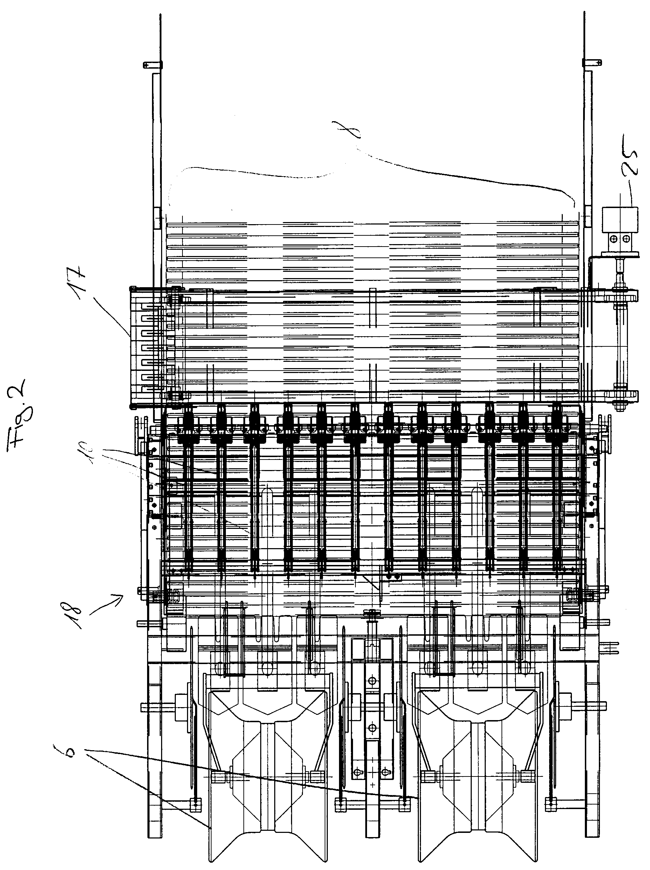

Wie Figur 2 zeigt, sind in der Regel mehrere Krautschwerter 10 nebeneinander und über die ganze Breite der Siebkette 8 gleichmässig verteilt angeordnet. Der Abstand zwischen den Krautschwertern ist so gewählt, dass die Kartoffeln in der Regel problemlos zwischen ihnen hindurchtreten können. Das kreuz und quer liegende Kraut 4 (hier nicht dargestellt) wird trotzdem von den Borsten 12 nahezu vollständig erfasst.

Direkt auf die Krautschwerter 10 auftreffende Kartoffeln 3 werden, im Gegensatz zu den vorbekannten Fingern, relativ schonend und abgepuffert durch das noch anhaftende Erdreich je nachdem etwas angehoben und zur Seite geschoben bzw. fallen zur Seite vom Krautschwert in das relativ weiche Erdreich 2. Die Verletzungsgefahr für die Kartoffeln ist damit gegenüber den bekannten Krautseparatoren wesentlich erniedrigt. Auf der anderen Seite wird eine hohe Effektivität der erfindungsgemässen Krautentfernungsvorrichtung durch Ausnützung der natürlichen Anordnung (Kraut oben, Kartoffeln/Erdreich unten) erzielt.

Wie aus Figur 2 ebenfalls ersichtlich, kann die erfindungsgemässe Krauttrennvorrichtung durch Wahl der geeigneten Anzahl Schwerter an ein-, zwei- und mehrspurige Kartoffelerntemaschinen 18 angepasst werden.

Auf die Darstellung der übrigen Teile von Kartoffelerntemaschinen, die aus dem Stand der Technik bekannt sind, braucht hier nicht weiter eingegangen zu werden, da sie dem einschlägigen Fachmann bekannt sind. Aus diesem Grund und der Übersichtlichkeit willen wurden auch in den Figuren diese vorbekannten Bestandteile nur soweit als für die Erläuterung unbedingt nötig eingezeichnet und erläutert.

Die genannten Funktionseinheiten der Krautentfernungseinrichtungen erfolgt auf eine der üblichen Arten, z. B. durch (mechanische) Kopplung mit dem Antrieb des Zugfahrzeugs oder durch eigene Antriebe, wie z. B. als Antrieb 25 für Querförderband 17 (Fig. 1) angedeutet.

Änderungen der erfindungsgemässen Krautentfernungsvorrichtung sind dem Fachmann eingängig, ohne den Bereich der Erfindung zu verlassen, wie die folgenden, denkbaren Varianten aufzeigen:

Die Borsten 12 können in verschiedene Anordnungen angeordnet werden und/oder aus verschiedenen Materialien bestehen, z. B. aus Kunststoff oder Metall. Sie können in Büscheln oder auch als gleichmässiger Borstensaum auf dem Band 11 angeordnet sein. Sie können durchgehend senkrecht vom Band 11 abstehen oder auch z. B. abwechselnd nach rechts und links schrägstehend sein. Im Extremfall sind auch querstehende Borsten, d. h. horizontal in den Zwischenraum zwischen den Krautschwertern 10 hineinragende, möglich.

Die Krautschwerter 10 können auch eine andere Form aufweisen. Denkbar ist z. B. die Anordnung der Borsten 12 auf sich drehenden Scheiben.

Vorteilhafte und z. T. schon besprochene Weiterbildungen zeigt Fig. 3. Vor jedem Krautschwert kann ein Bügel oder Leitstab 20 vorhanden sein. Insbesondere bei lockerem Boden wirken diese Leitstäbe ähnlich Wellenbrechern, d. h. der auf diese Leitstäbe auftreffende Boden wird von den Leitstäben 20 gespalten und zerfällt. Dadurch wird ein Verstopfen der Krautentfernungsvorrichtung vermieden. Ausserdem wird das Kraut nochmals nach oben bewegt, wodurch sich die Wirksamkeit der Krautentfernungsvorrichtung erhöht.

Eine Andruckwalze 21 presst einerseits das Kraut, das zunächst lose von den Borsten erfasst wird, fester in die Borsten hinein und verringert damit die Gefahr, dass Kraut wieder aus den Borsten herausgleitet, wieder auf das Siebkettenförderband 8 zurückfällt und weiterbefördert wird.

Der Trenner 22 kann z. B. aus Leisten bestehen, die zwischen den Krautschwertern angeordnet sind. Die auf das Obertrum gerichtete Kante bildet bevorzugt einen rechten oder spitzen Winkel mit dem oberhalb des Trenners 22 befindlichen Obertrums des Bandes 11. Denkbar ist auch ein vollständiger Verzicht auf den Trenner 22. Die Krautentfernungsvorrichtung kann auch mehrfach in einer Erntemaschine vorhanden und/oder an anderer Stelle angeordnet sein.

## Patentansprüche

1. Krautentfernungsvorrichtung an einer Kartoffelerntemaschine (18) mit einem förderbandartigen Fördermittel (8), das zur Beförderung von zumindest Kartoffeln (3) und Kraut (4) oben auf dem Fördermittel (8) während des Erntevorganges dient, dadurch gekennzeichnet, dass die Krautentfernungsvorrichtung mindestens eine Krautgreifvorrichtung (10) aufweist, wobei die Krautgreifvorrichtung jeweils Greifmittel (12) besitzt, die derart bewegbar sind, dass Kraut (4), das sich auf dem Fördermittel (8) befindet, von den Greifmitteln (12) erfassbar und vom auf dem Fördermittel (8) befindlichen Fördergut nach oben entfernbar ist.

2. Krautentfernungsvorrichtung gemäss Anspruch 1, dadurch gekennzeichnet, dass die Greifmittel (12) im wesentlichen aus Borsten bestehen.

3. Krautentfernungsvorrichtung gemäss Anspruch 2, dadurch gekennzeichnet, dass die Borsten (12) zu Büscheln gruppiert sind.

4. Krautentfernungsvorrichtung gemäss einem der Ansprüche 1 bis 3, dadurch gekennzeichnet, dass die Greifmittel (12) auf einem umlaufenden Band (11) angeordnet sind.

5. Krautentfernungsvorrichtung gemäss einem der Ansprüche 2 bis 4, dadurch gekennzeichnet, dass die Borsten (12) aus Kunststoff und/oder Metall bestehen.

6. Krautentfernungsvorrichtung gemäss einem der Ansprüche 2 bis 5, dadurch gekennzeichnet, dass mindestens zwei Krautgreifvorrichtungen (10) über im wesentlichen die gesamte Breite der Fördervorrichtung (8) verteilt in einem solchen Abstand angeordnet sind, dass insbesondere Kartoffeln (3) auf der Fördervorrichtung (8) zwischen den Krautgreifvorrichtungen hindurchtreten können, jedoch Kraut (4) im wesentlichen auf der gesamten Breite der Fördervorrichtung (8) erfassbar ist.

7. Krautentfernungsvorrichtung gemäss einem der Ansprüche 1 bis 6, dadurch gekennzeichnet, dass mindestens zwei Krautgreifvorrichtungen (10) vorhanden sind und sich zwischen je zwei Krautgreifvorrichtungen (10) ein Trenner (22) befindet, um Kartoffeln, die an von den Greifmitteln (12) erfasstem Kraut hängen, aufzuhalten und vom Kraut abzutrennen.

8. Krautentfernungsvorrichtung gemäss einem der Ansprüche 1 bis 7, dadurch gekennzeichnet, dass
- das Fördermittel (8) im Ernteeinsatz zumindest auf einer Teilstrecke Kartoffeln (3) in Erdreich (2) eingebettet und mit im wesentlichen obenauf liegendem Kraut (4) befördert, und
- dass die Krautgreifvorrichtung (10) in dieser Teilstrecke angreifend angeordnet ist.

9. Krautentfernungsvorrichtung gemäss einem der Ansprüche 1 bis 8, dadurch gekennzeichnet, dass die Greifmittel (12) so nahe an das Fördermittel (8) heranbewegbar sind, dass die Greifmittel (12) die auf dem Förderband befindlichen Kartoffeln (3) berühren können, bevorzugt aber nicht das Fördermittel (8), um eine möglichst vollständige Erfassung des Krauts (4) zu bewirken.

10. Krautentfernungsvorrichtung gemäss einem der Ansprüche 1 bis 9, dadurch gekennzeichnet, dass eine Andruckwalze (21) über den Krautgreifvorrichtungen derart angeordnet ist, dass die Greifmittel (12) nahe daran vorbeibewegbar sind, wenn sie sich vom Fördermittel (8) wegbewegen, um von den Greifmitteln (12) erfasstes Kraut (4) gegen die Greifmittel anzudrücken und dadurch die Haltewirkung der Greifmittel zu verstärken.

11. Krautentfernungsvorrichtung gemäss einem der Ansprüche 1 bis 10, dadurch gekennzeichnet, dass sich in Förderrichtung vor mindestens einer Krautgreifvorrichtung (10), bevorzugt allen Krautgreifvorrichtungen (10) der Krautentfernungsvorrichtung, ein sich in Förderrichtung (9) mit zunehmender Höhe über dem Fördermittel (8) erstreckender Leitstab (20) befindet, um Kraut und/oder andere, von den Greifmitteln erfassbare und durch die Krautentfernungsvorrichtung abführbare Objekte auf dem Fördermittel (8) auf die Greifmittel (12) zu lenken.

12. Verfahren zum Betrieb einer Krautentfernungsvorrichtung gemäss einem der Ansprüche 1 bis 9, dadurch gekennzeichnet, dass die Greifmittel (12) auf das Fördermittel (8) zu- und anschliessend von diesem wegbewegt werden und dass die Greifmittel (12) mindestens beim Übergang von ersterer auf die letztere Bewegung eine Bewegung mit einer Komponente entgegen der Förderrichtung des Fördermittels (8) ausführen.

13. Kartoffelerntemaschine mit einer Krautentfernungsvorrichtung gemäss einem der Ansprüche 1 bis 11.
